# EUROPÄISCHE PATENTSCHRIFT

(11) **EP 3 532 243 B1**
(45) Veröffentlichungstag und Bekanntmachung des Hinweises auf die Patenterteilung: **11.01.2023**
(21) Anmeldenummer: 17783385.2
(22) Anmeldetag: 13.09.2017
(51) Int. Cl.: B24B 49/03, B24B 49/05, B24B 51/00, B23Q 7/14, F16C 33/00

(54) **VERFAHREN ZUR HERSTELLUNG VON LAGERKOMPONENTEN, SOWIE FERTIGUNGSANLAGE UND WÄLZ- ODER GLEITLAGER**
METHOD FOR PRODUCING BEARING COMPONENTS AND PRODUCTION SYSTEM AND ROLLER OR SLIDE BEARING
PROCÉDÉ DE FABRICATION DE COMPOSANTS DE PALIER, INSTALLATION DE FABRICATION ET PALIER À ROULEMENT OU PALIER LISSE

(30) Priorität: 26.10.2016 DE 102016221046
(43) Veröffentlichungstag der Anmeldung: 04.09.2019
(73) Patentinhaber: Schaeffler Technologies AG & Co. KG, 91074 Herzogenaurach (DE)
(72) Erfinder: SCHNABEL, Wolfgang, 91086 Aurachtal (DE); SCHREIBER, Martin, Singapore 278737 (SG); JUNG, Oliver, 90768 Fürth (DE)
(86) Internationale Anmeldenummer: PCT/DE2017/100773
(87) Internationale Veröffentlichungsnummer: WO 2018/077327

(56) Entgegenhaltungen:
- EP-A1- 1 801 577
- DE-B4- 19 758 774
- US-A1- 2006 203 230
- US-A1- 2006 226 584

## Beschreibung

Die Erfindung betrifft ein Verfahren zur Herstellung von Lagerkomponenten zur Ausbildung eines Wälz- oder Gleitlagers. Dabei werden mindestens zwei Fertigungsstraßen eingesetzt, wobei jede Fertigungsstraße mindestens eine Schleifmaschine, mindestens eine Honmaschine, mindestens eine Messeinheit zur Vermessung der Lagerkomponenten und mindestens eine Transporteinheit umfasst. Jede Lagerkomponente wird mittels der mindestens einen Transporteinheit durch die jeweilige Fertigungsstraße transportiert wird, wobei mindestens eine Schleifbearbeitung jeder Lagerkomponente mittels der mindestens einen Schleifmaschine und mindestens ein Honen jeder Lagerkomponente mittels der mindestens einen Honmaschine erfolgt. Eine erste Lagerkomponente der Lagerkomponenten wird in mindestens einer der mindestens zwei Fertigungsstraßen vor der Schleifbearbeitung und/oder nach der Schleifbearbeitung und/oder nach dem Honen zur Ermittlung mindestens eines Abmaßes der ersten Lagerkomponente mittels der mindestens einen Messeinheit vermessen. Weiterhin betrifft die Erfindung ein nach diesem Verfahren hergestelltes Wälzlager.

Die Erfindung betrifft weiterhin eine Fertigungsanlage umfassend mindestens zwei Fertigungsstraßen zur Herstellung von Lagerkomponenten und mindestens eine, den Fertigungsstraßen nachgeordnete Montageeinheit zur Montage eines Wälz- oder Gleitlager aus den Lagerkomponenten. Jede Fertigungsstraße umfasst jeweils mindestens eine Schleifmaschine, mindestens eine Honmaschine, mindestens eine Messeinheit zur Vermessung der Lagerkomponenten und mindestens eine Transporteinheit, wobei die Lagerkomponenten mittels der mindestens einen Transporteinheit durch die jeweilige Fertigungsstraße transportierbar und dabei der mindestens einen Schleifmaschine und der mindestens einen Honmaschine zuführbar sind. Eine erste Lagerkomponente der Lagerkomponenten ist in mindestens einer der mindestens zwei Fertigungsstraßen vor der Schleifbearbeitung und/oder nach der Schleifbearbeitung und/oder nach dem Honen zur Ermittlung mindestens eines Abmaßes der ersten Lagerkomponente vermessbar.

So sind Fertigungsstraßen und Fertigungsanlagen der eingangs genannten Art zur Herstellung von Komponenten für Wälz- oder Gleitlager z.B. aus der Druckschrift US 2006/203230 A1 bereits bekannt, auf welcher jeweils der Oberbegriff des Verfahrensanspruch bzw. Vorrichtungsanspruch basiert.

Basierend auf solchen Fertigungsstraßen zur Herstellung von Komponenten für Wälz- oder Gleitlager ist es nun Aufgabe der Erfindung, ein Verfahren und eine Fertigungsanlage bereitzustellen, um eine Fertigung von Lagerkomponenten weiter zu vereinfachen und die Genauigkeit der gefertigten Lagerkomponenten und daraus gebildeten Lager zu erhöhen.

Die Aufgabe wird für das Verfahren zur Herstellung von Lagerkomponenten zur Ausbildung eines Wälz- oder Gleitlagers, wobei mindestens zwei Fertigungsstraßen eingesetzt werden, wobei jede Fertigungsstraße mindestens eine Schleifmaschine, mindestens eine Honmaschine, mindestens eine Messeinheit zur Vermessung der Lagerkomponenten und mindestens eine Transporteinheit umfasst, wobei jede Lagerkomponente mittels der mindestens einen Transporteinheit durch die jeweilige Fertigungsstraße transportiert wird, wobei mindestens eine Schleifbearbeitung jeder Lagerkomponente mittels der mindestens einen Schleifmaschine und mindestens ein Honen jeder Lagerkomponente mittels der mindestens einen Honmaschine erfolgt, wobei eine erste Lagerkomponente der Lagerkomponenten in mindestens einer der mindestens zwei Fertigungsstraßen vor der Schleifbearbeitung und/oder nach der Schleifbearbeitung und/oder nach dem Honen zur Ermittlung mindestens eines Abmaßes der ersten Lagerkomponente mittels der mindestens einen Messeinheit vermessen wird, dadurch gelöst, dass die mindestens zwei Fertigungsstraßen derart synchronisiert betrieben werden, dass eine Regelung der Schleifbearbeitung und/oder des Honens zur Fertigung einer weiteren Lagerkomponente in der zumindest einen weiteren Fertigungsstraße basierend auf dem mindestens einen ermittelten Abmaß der ersten Lagerkomponente erfolgt, und wobei die erste Lagerkomponente und die mindestens eine weitere Lagerkomponente zur Ausbildung des Wälz- oder Gleitlagers miteinander kombiniert werden.

Auf den Fertigungsstraßen werden demnach Lagerkomponenten von Wälz- oder Gleitlagern gefertigt, die in ihren Abmaßen und Toleranzen unmittelbar aufeinander abgestimmt sind und perfekt zueinander passen. Eine aufwendige, bisher notwendige Zusammenstellung ( "Paarung" genannt) beispielsweise einer Lagerkomponente in Form eines Innenrings mit einer in Maß und Toleranz passenden Lagerkomponente in Form eines Außenrings kann entfallen. Dadurch werden unmittelbar Wälz- oder Gleitlager mit besonders geringem Lagerspiel und in Folge besonders geringem Laufgeräusch herstellbar.

Bevorzugt wird die Lagerkomponente als ein Lagerring, insbesondere als ein Lageraußenring oder als ein Lagerinnenring, oder als ein Wälzkörper ausgebildet.

Bei einem Vorhandensein von zwei Fertigungsstraßen werden auf den beiden Fertigungsstraßen insbesondere einerseits ein Lagerinnenring und andererseits ein Lageraußenring von Wälz- oder Gleitlagern gefertigt, die in ihren Abmaßen und Toleranzen unmittelbar zueinander passen. Eine aufwendige, bisher notwendige Zusammenstellung (Paarung) eines Lagerinnenrings mit einem in Maß und Toleranz passenden Lageraußenring kann entfallen. Dadurch werden insbesondere Gleitlager mit besonders geringem Lagerspiel und in Folge besonders geringem Laufgeräusch herstellbar.

Beispielsweise werden eine erste Fertigungsstraße für Lagerinnenringe und eine, insbesondere parallel dazu verlaufende weitere Fertigungsstraße für Lageraußenringe miteinander synchronisiert. Dabei werden Messergebnisse zu den gefertigten Abmaßen der, insbesondere nach einer Hartbearbeitung, vorliegenden Lagerinnenringe aus der ersten Fertigungsstraße an Fertigungseinheiten, vorzugweise in Form von Weichbearbeitungseinheit(en), der weiteren Fertigungsstraße übermittelt (oder umgekehrt) und Sollmaße für insbesondere eine Weichbearbeitung in der zweiten Fertigungsstraße (im umgekehrten Fall in der ersten Fertigungsstraße) entsprechend darauf abgestimmt.

Nach einer Kombination des Lagerinnenrings mit dem dazu abgestimmt gefertigten Lageraußenring können gezielt aus Standardprozessen stammende Wälzkörper mit passenden Toleranzen damit kombiniert werden. Alternativ kann eine abgestimmte Fertigung auch der benötigten Wälzkörper auf einer ebenfalls synchronisierten dritten Fertigungsstraße erfolgen. Da pro Wälzlager in der Regel ein Lagerinnenring, ein Lageraußenring und eine Mehrzahl von Wälzkörpern benötigt werden, ist das Vorhandensein mehrerer paralleler dritter Fertigungsstraßen für die Herstellung von Wälzkörpern bevorzugt. Dabei wird die benötigte Anzahl an Wälzkörpern synchron mit dem damit zu montierenden Lagerinnenring und Lageraußenring gefertigt und die entsprechende Maßanpassung durchgeführt.

Vorzugsweise werden bei dem erfindungsgemäßen Verfahren mindestens drei Fertigungsstraßen synchronisiert betrieben, wobei die erste Lagerkomponente in mindestens einer ersten Fertigungsstraße der mindestens drei Fertigungsstraßen vor der Schleifbearbeitung und/oder nach der Schleifbearbeitung und/oder nach dem Honen zur Ermittlung des mindestens einen Abmaßes der ersten Lagerkomponente vermessen wird, wobei eine Regelung der Schleifbearbeitung und/oder des Honens zur Fertigung einer zweiten Lagerkomponente in der zweiten Fertigungsstraße basierend auf dem mindestens einen ermittelten Abmaß der ersten Lagerkomponente erfolgt. Die zweite Lagerkomponente wird in der zweiten Fertigungsstraße vor der Schleifbearbeitung und/oder nach der Schleifbearbeitung und/oder nach dem Honen zur Ermittlung mindestens eines weiteren Abmaßes der zweiten Lagerkomponente vermessen, und wobei eine Regelung der Schleifbearbeitung und/oder des Honens zur Fertigung mindestens einer dritten Lagerkomponente in der mindestens einen dritten Fertigungsstraße basierend auf mindestens dem ermittelten Abmaß und/oder dem ermittelten weiteren Abmaß erfolgt.

Dieses Verfahren mit drei oder mehr Fertigungsstraßen eignet sich beispielsweise besonders zur Fertigung von Wälzlagern, bei denen Lagerkomponenten in Form von Lagerinnenringen, Lageraußenringen und Wälzkörpern hergestellt und bei der Endmontage zusammengeführt werden müssen.

Dabei erfolgt eine Synchronisierung der mindestens drei Fertigungsstraßen insbesondere derart, dass die Messergebnisse zu den gefertigten Abmaßen der, vorzugsweise nach einer Hartbearbeitung, vorliegenden Lagerinnenringe und Lageraußenringe an vorzugsweise die Weichbearbeitungseinheit(en) der mindestens einen dritten Fertigungsstraße übermittelt und die Sollmaße, für bevorzugt eine Weichbearbeitung in der dritten Fertigungsstraße, zur Herstellung der Wälzkörper entsprechend darauf abgestimmt werden. Dabei erfolgen eine Weichbearbeitung vor dem Härten und eine Hartbearbeitung nach einem Härten der Lagerkomponente.

Damit werden auf den mindestens drei Fertigungsstraßen Lagerinnenringe und Lageraußenringe sowie Wälzkörper gefertigt, die in ihren Abmaßen und Toleranzen unmittelbar zueinander passen. Eine aufwendige, bisher notwendige Zusammenstellung (genannt "Paarung") eines Lagerinnenrings mit einem in Maß und Toleranz passenden Lageraußenring sowie mit einer vorsortierten Gruppe an Wälzkörpern kann entfallen. Dadurch werden die bisher erforderlichen Sortiereinrichtungen für Wälzkörper bestimmter Maßklassen und Magazine für die Vorhaltung der jeweiligen Maßklassen bei der Montage der Wälzkörper vermieden.

Die Fertigung und die Komplexität der Fertigungsstraße werden durch die Maßnahmen wesentlich vereinfacht und verschlankt.

Vorzugsweise durchläuft jede Lagerkomponente die jeweilige Fertigungsstraße liegend auf einer gleichbleibenden horizontalen Ebene (E). Es hat sich hierbei insbesondere bewährt, wenn als mindestens eine Schleifmaschine eine Vertikalschleifmaschine eingesetzt wird.

Es hat sich gezeigt, dass eine signifikante Verbesserung der Maßhaltigkeit einer Lagerkomponente erreicht werden kann, wenn die Anzahl an mechanischen Eingriffen, die auf die Lagerkomponente einwirken, vermindert wird. Dabei hat es sich insbesondere gezeigt, dass es besonders effektiv hinsichtlich der angestrebten Maßhaltigkeit und der gewünschten geringen Toleranzen ist, die Lagerkomponente auf einer gleichbleibenden horizontalen Ebene durch die Fertigungsstraße zu transportieren. Dabei wird eine Höhenlagenverschiebung eines Schwerpunkts einer Lagerkomponente um bis zu ± 10 cm, insbesondere bis zu ± 5 cm, noch als ein Transport in einer gleichbleibenden horizontalen Ebene angesehen. Dazu müssen allerdings Fertigungseinheiten eingesetzt werden, die eine derartige Vorgehensweise auch ermöglichen. Dabei hat es sich als erforderlich herausgestellt, dass die mindestens eine Schleifmaschine durch eine Vertikalschleifmaschine bereitgestellt wird. Eine derartige Vertikalschleifmaschine lässt sich in eine Fertigungsstraße integrieren, bei der die Lagerkomponente auf einer gleichbleibenden horizontalen Ebene durch die Fertigungsstraße läuft. Auch eine Reduzierung von Kontakten zwischen Lagerkomponenten ist erreichbar und wirkt sich positiv auf die Maßhaltigkeit und Toleranzen einer Lagerkomponente aus. Bei dem Transport der Lagerkomponenten auf gleichbleibender horizontaler Ebene durch die Fertigungsstraße kann auf Greifer, Rampen und Rutschen weitgehend verzichtet werden.

Die mindestens eine Honmaschine ist in einer bevorzugten Ausgestaltung des Verfahrens als eine Vertikalhonmaschine ausgebildet. Eine solche Vertikalhonmaschine lässt sich ideal in eine Fertigungsstraße umfassend Vertikalschleifmaschinen integrieren und ermöglicht ebenfalls einen Transport der jeweiligen Lagerkomponente auf einer gleichbleibenden horizontalen Ebene durch die Fertigungsstraße. Die Verknüpfung zwischen einer Vertikalschleifmaschine und einer Vertikalhonmaschine wird bevorzugt über eine Transporteinheit in Form eines Förderbands ausgebildet. Alternativ können eine in die Honmaschine integrierte Transporteinheit und eine in die Vertikalschleifmaschien integrierte weitere Transporteinheit eingesetzt werden, um eine Verknüpfung dieser Fertigungseinheiten auszubilden.

Insbesondere durchlaufen die Lagerkomponenten die mindestens zwei Fertigungsstraßen auf der gleichen horizontalen Ebene E. Dies vereinfacht eine Zusammenführung von fertig bearbeiteten Lagerkomponenten aus unterschiedlichen Fertigungsstraßen.

Bevorzugt wird die in dem Verfahren eingesetzte Fertigungsstraße weiterhin umfassend mindestens eine Demagnetisierungseinheit ausgebildet, wobei die Lagerkomponente nach der Schleifbearbeitung und/oder dem Honen demagnetisiert wird. Die Fertigungsstraße umfasst demnach vorzugsweise weiterhin mindestens eine Demagnetisierungseinheit zum Demagnetisieren der Lagerkomponenten. Der Demagnetisierungsschritt ermöglicht ein gründliches Reinigen der bearbeiteten Lagerkomponente von anhaftenden Metallpartikeln oder Metallspänen.

In die Fertigungsstraße können weitere Fertigungseinheiten eingebunden sein, wie vorzugsweise mindestens eine der nachfolgenden Einheiten: eine Fräsmaschine, eine Drehmaschine, eine Läppmaschine, eine Bohrmaschine, eine Stanzeinheit, eine Presseneinheit, eine Wärmebehandlungseinheit, eine Härtungseinheit, eine Trocknungseinheit, eine automatische Zuführeinheit und/oder mindestens eine automatische Verpackungseinheit. Demnach ist eine oben genannte Weichbearbeitungseinheit beispielsweise eine Material-abtragende Einheit wie eine Schleifmaschine oder eine Fräsmaschine, wenn diese in Transportrichtung einer Lagerkomponente durch eine Fertigungsstraße vor einer Härtungseinheit angeordnet ist. Dagegen ist eine oben genannte Hartbearbeitungseinheit beispielsweise eine Material-abtragende Einheit wie eine Schleifmaschine oder eine Fräsmaschine, wenn diese in Transportrichtung einer Lagerkomponente durch eine Fertigungsstraße nach einer Härtungseinheit angeordnet ist.

Die Lagerkomponente wird vorzugsweise nach dem Honen und/oder nach dem Demagnetisieren in der mindestens einen Reinigungseinheit gereinigt. Dies dient zur Säuberung der Lagerkomponenten, wobei eine Entfernung von anhaftenden Metallpartikeln oder Metallspänen, Schmieröl, Schneidflüssigkeiten, Schmutz und dergleichen erfolgt. Dabei umfasst eine Reinigungseinheit vorzugsweise eine Wascheinheit und/oder eine Gasstrahlreinigungsanlage. Insbesondere erfolgt eine Ermittlung eines Abmaßes einer Lagerkomponente nach einem Durchlauf durch eine solche Reinigungseinheit, um Fehlmessungen aufgrund von anhaftendem Metallstaub oder Metallspänen zu vermeiden.

Insbesondere ist mindestens eine, den mindestens zwei Fertigungsstraßen nachgeordnete Montageeinheit vorgesehen, in welcher eine Montage der miteinander zu kombinierenden ersten Lagerkomponente und der zumindest einen weiteren Lagerkomponente zu dem Wälz- oder Gleitlager erfolgt. Durch eine solche sofortige Kombination und Montage der Lagerkomponenten nach deren Fertigung wird eine sonst notwenige aufwendige logistische Nachverfolgung der zusammenpassend gefertigten Lagerkomponenten zuverlässig vermieden.

Weiterhin können auch zusätzliche Lagerkomponenten, wie Käfige oder Käfigsegmente, Dichtungen, textile Gleitwerkstoff-Einlagen, Schmiermittel, Messeinrichtungen und so weiter vorgesehen sein, die in der Montageeinheit mit der ersten Lagerkomponente und der mindestens einen weiteren Lagerkomponente zusammengeführt und zu dem fertigen Wälz- oder Gleitlager verbunden werden. Diese zusätzlichen Lagerkomponenten können aus weiteren synchronisierten Fertigungsstraßen stammen.

Die Aufgabe wird weiterhin für die Fertigungsanlage umfassend mindestens zwei Fertigungsstraßen zur Herstellung von Lagerkomponenten und mindestens eine, den Fertigungsstraßen nachgeordnete Montageeinheit zur Montage eines Wälz- oder Gleitlagers aus den Lagerkomponenten, wobei jede Fertigungsstraße jeweils mindestens eine Schleifmaschine, mindestens eine Honmaschine, mindestens eine Messeinheit zur Vermessung der Lagerkomponenten und mindestens eine Transporteinheit umfasst, wobei die Lagerkomponenten mittels der mindestens einen Transporteinheit durch die jeweilige Fertigungsstraße transportierbar und dabei der mindestens einen Schleifmaschine und der mindestens einen Honmaschine zuführbar sind, wobei eine erste Lagerkomponente der Lagerkomponenten in mindestens einer der mindestens zwei Fertigungsstraßen vor der Schleifbearbeitung und/oder nach der Schleifbearbeitung und/oder nach dem Honen zur Ermittlung mindestens eines Abmaßes der ersten Lagerkomponente vermessbar ist, dadurch gelöst, dass die mindestens zwei Fertigungsstraßen durch mindestens eine Datenübertragungsleitung miteinander verbunden und derart synchronisiert betreibbar sind, dass das mindestens eine ermittelte Abmaß der ersten Lagerkomponente zumindest an eine weitere Fertigungsstraße der mindestens zwei Fertigungsstraßen übermittelbar ist, und dass die Schleifbearbeitung und/oder das Honen zur Fertigung einer weiteren Lagerkomponente in der zumindest einen weiteren Fertigungsstraße basierend auf dem mindestens einen ermittelten Abmaß der ersten Lagerkomponente geregelt ist.

Der Vorteil einer derartigen Fertigungsanlage besteht darin, dass keine Sortier- oder Zwischenlagerschritte vorgenommen und keine dafür erforderlichen Einrichtungen vorgesehen werden müssen, wie dies bei herkömmlichen Fertigungsanlagen für Wälz- oder Gleitlager der Fall ist. Dennoch können Wälz- oder Gleitlager endmontiert bereitgestellt werden, die ein besonders geringes Lagerspiel sowie Laufgeräusch aufweisen.

Bevorzugt ist jede Fertigungsstraße derart ausgebildet, dass die Lagerkomponenten diese auf einer gleichbleibenden horizontalen Ebene E durchlaufen. Wie oben bereits dargestellt hat es sich gezeigt, dass eine signifikante Verbesserung der Maßhaltigkeit einer Lagerkomponente erreicht werden kann, wenn die Anzahl an mechanischen Eingriffen, die auf die Lagerkomponente einwirken, vermindert wird.

In einer bevorzugten Ausführungsform der Fertigungsanlage ist mindestens eine Bediengasse vorhanden, wobei beiderseits einer jeden Bediengasse je eine Fertigungsstraße angeordnet ist, deren Bedien- und Anzeigeeinheiten zueinander zeigend angeordnet sind.

Es ist bevorzugt, wenn mindestens eine Montageeinheit mit den mindestens zwei Fertigungsstraßen verkettet ist und zur Endmontage des Wälz- oder Gleitlagers umfassend die aus den mindestens zwei Fertigungsstraßen stammenden Lagerkomponenten eingerichtet ist.

Insbesondere sind vorzugsweise mindestens drei Fertigungsstraßen in der Fertigungsanlage vorgesehen, die synchronisiert betreibbar sind.

Die Aufgabe wird weiterhin durch ein Wälzlager gelöst, welches nach dem erfindungsgemäßen Verfahren hergestellt ist, wobei ein Laufgeräusch des Wälzlagers mit einem maximalen Schalldruckpegel von 30 Dezibel, insbesondere von maximal 20 Dezibel, gemessen bei einer thermischen Bezugsdrehzahl n_{B} (gemäß ISO 15312, zum Stand Oktober 2008) des Wälzlagers, vorliegt. Die thermische Bezugsdrehzahl ist die Drehzahl, bei der sich unter definierten Bezugsbedingungen, welche in der bereits genannten ISO 15312 definiert sind, eine Lagertemperatur von +70°C einstellt. Siehe zu den Bezugsbedingungen auch den Katalog "Wälzlager" der Schaeffler KG in der 1., überarbeiteten und erweiterten Auflage aus Oktober 2008.

Jedoch ist ein solches Lager kein Gegenstand der Erfindung und nicht beansprucht.

Ublicherweise erfolgt eine Bestimmung des Laufgeräusches des Wälzlagers erst nach einer kurzen definierten Einlaufphase, um ein Anlaufreibungsmoment zu eliminieren. Das Laufgeräusch ist eine messbare Kenngröße und steht in direktem Zusammenhang mit der Qualität des Wälzlagers. Je niedriger das Laufgeräusch ist, desto höher ist die Qualität und die Lebensdauer des Wälzlagers. Üblicherweise werden drei Frequenzen (Hoch-, Tief- und Mittelfrequenzen) mittels eines Mikrofones oder eines Körperschall-Sensors gemessen. Dazu werden die Lagerringe mit einer definierten Messkraft belastet und eine definierte Drehzahl gewählt. Das Laufgeräusch eines Wälzlagers kann dabei durch eine Befettung verringert werden. Der geforderte maximale Schalldruckpegel soll hier für ein befettetes Lager gelten.

Generell weisen die aus den, nach dem erfindungsgemäßen Verfahren gefertigten Lagerkomponenten montierten Gleit- oder Wälzlager besonders geringe Toleranzen und eine hohe Laufruhe auf, resultierend in einem besonders geringen/leisen Laufgeräusch im Betrieb.

Damit werden gegenüber herkömmlichen Fertigungsanlagen, bei denen eine getrennte Fertigung der Lagerkomponenten und eine nachfolgende Sortierung und Paarung erfolgt, deutlich geringere Lagerspiele erreicht.

Die daraus resultierende höhere Laufruhe des Wälzlagers ist über z.B. Körperschallsensoren messbar.

Das dem jeweiligen Lager zugeordnete Frequenzspektrum kann auf dem jeweiligen Lager zur Identifizierung (Kopierschutz) und Überprüfung seiner Lebensdauer sowie einer Erkennung von Wartungserfordernissen hinterlegt werden. So können auch am Einsatzort des Lagers Vergleiche zwischen dem ursprünglichen und dem nach einer Laufzeit von eine bestimmten Anzahl an Stunden vorliegende, messbare Frequenzspektrum miteinander verglichen und Maßnahmen, insbesondere zur Wartung, abgeleitet werden.

Alternativ zu einer Hinterlegung des Frequenzspektrums können auch das Spektrum kennzeichnende Merkmale, wie eine Frequenzamplitude usw., hinterlegt werden.

Nach dem vorgeschlagenen Fertigungsverfahren hergestellte Wälz- oder Gleitlager sind über ihr Frequenzspektrum oder kennzeichnende Merkmale des Spektrums erkennbar. Ein Kopierschutz für das Wälz- oder Gleitlager kann durch eine Hinterlegung seines Frequenzspektrums oder kennzeichnender Merkmale des Spektrums auf dem Wälz- oder Gleitlager erfolgen.

Die Figuren 1 bis 2 zeigen beispielhaft eine Fertigungsstraße, eine Fertigungsanlage und ein Verfahren zur Herstellung von Lagerkomponenten auf. So zeigt
FIG 1 eine Fertigungsstraße; und
FIG 2 eine Fertigungsanlage umfassend vier Fertigungsstraßen zur Herstellung von Lagerkomponenten;

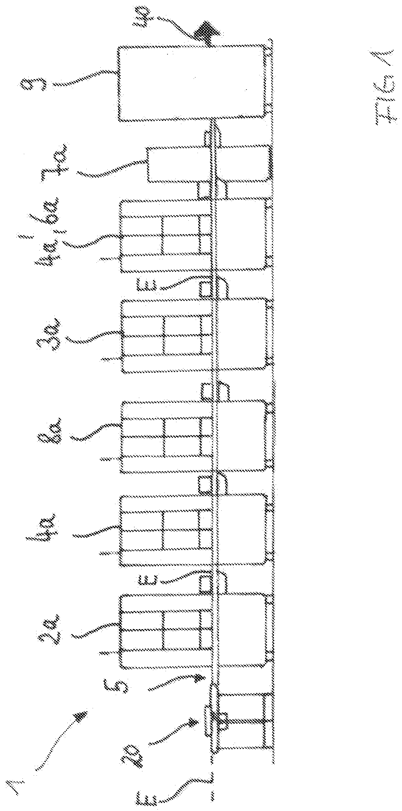

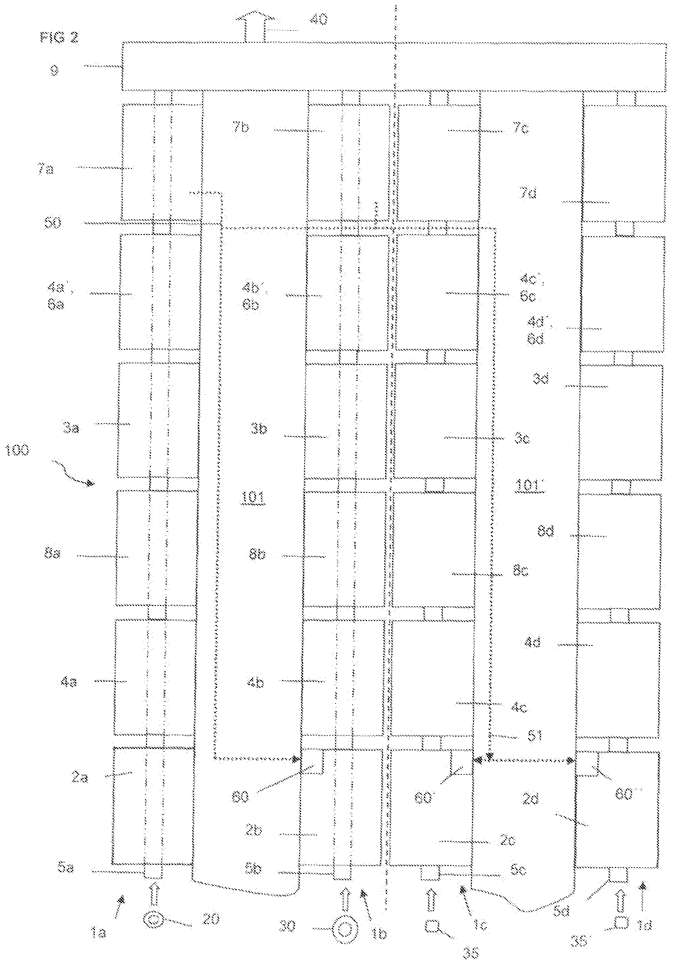

FIG 1 zeigt eine Fertigungsstraße 1 zur Herstellung einer Lagerkomponente, wie einem Lagerring 20. Hier wird der Einfachheit halber bereits der zu bearbeitende Rohling, der beim Durchlauf durch die Fertigungsstraße 1 erst durch Bearbeitung zu dem Lagerring 20 ausgebildet wird, mit dem Bezugszeichen 20 bezeichnet. Die Fertigungsstraße 1 umfasst mehrere Fertigungseinheiten in Form einer Schleifmaschine 2a, einer ersten Reinigungseinheit 4a, einer Härtungseinheit 8a, einer Honmaschine 3a, einer weiteren Reinigungseinheit 4a' in Kombination mit einer Demagnetisierungseinheit 6a, einer Messeinheit 7a zur Vermessung der Lagerkomponente und einer Transporteinheit 5. Die Lagerkomponente wird mittels der Transporteinheit 5 durch die Fertigungsstraße 1 transportiert, wobei eine Schleifbearbeitung jeder Lagerkomponente mittels der Schleifmaschine 2a und ein Honen der Lagerkomponente mittels der Honmaschine 3a erfolgt. Vor der Schleifbearbeitung und/oder nach der Schleifbearbeitung und/oder nach dem Honen wird die Lagerkomponente zur Ermittlung mindestens eines Abmaßes dieser ersten Lagerkomponente mittels der Messeinheit 7a vermessen. Die Fertigungsstraße 1 ist weiterhin derart ausgebildet, dass die Lagerkomponenten diese liegend auf einer gleichbleibenden horizontalen Ebene E durchlaufen. Die Transporteinheit 5 umfasst bevorzugt mehrere Förderbänder, welche unmittelbar aneinander anschließen und zum Transport der zu bearbeitenden Rohlinge in der horizontalen Ebene E durch die Fertigungsstraße 1 eingerichtet sind. Dabei können in der Fertigungsstraße 1 in die Fertigungseinheiten integrierte Transporteinheiten 5 und/oder separate Transporteinheiten 5 zum Einsatz kommen. Der Fertigungsstraße 1 nachgeordnet ist eine Montageeinheit 9 vorhanden, in welche der fertige, vermessene Lagerring 20 eingespeist und mit weiteren, darauf in ihren Abmaßen unmittelbar abgestimmten Lagerkomponenten aus parallelen Fertigungsstraßen (vergleiche FIG 2) zu einem Wälz- oder Gleitlager 40 montiert wird.

FIG 2 zeigt eine Fertigungsanlage 100 umfassend vier parallele Fertigungsstraßen 1a, 1b, 1c, 1d zur Herstellung von Lagerkomponenten. Dabei sind eine erste Fertigungsstraße 1a und eine zweite Fertigungsstraße 1b einer ersten Bediengasse 101 zugeordnet, während eine dritte Fertigungsstraße 1c und eine vierte Fertigungsstraße 1d einer zweiten Bediengasse 101' zugeordnet sind. Beide Anlagenteile sind durch eine mittig eingezeichnete, gestrichelt dargestellte Trennlinie abgeteilt, da der linke Teil umfassend die erste Fertigungsstraße 1a und die zweite Fertigungsstraße 1b auch ohne den rechten Teil umfassend die dritte Fertigungsstraße 1c und die vierte Fertigungsstraße 1d betrieben werden kann. So sind insbesondere bei der Gleitlagerfertigung oft lediglich zwei parallele, synchronisierte Fertigungsstraßen zur Herstellung eines Lagerinnenrings und eines Lageraußenrings vorhanden. Aber auch bei der Wälzlagerfertigung können lediglich zwei synchronisierte Fertigungsstraßen zur Herstellung insbesondere eines Lagerinnenrings und eines Lageraußenrings vorhanden sein, wobei die Wälzkörper wie bisher aus einer Sortiereinrichtung für Wälzkörper bestimmter Maßklassen stammen und in Magazinen zu den jeweiligen Maßklassen für eine Zuordnung und Montage der Wälzkörper vorgehalten werden.

In der Fertigungsstraße 1a wird eine erste Lagerkomponente in Form eines Lagerrings 20 gefertigt, hier insbesondere in Form eines Lagerinnenrings. Auch hier wird der Einfachheit halber bereits der zu bearbeitende Rohling, der beim Durchlauf durch die erste Fertigungsstraße 1a erst durch Bearbeitung zu dem Lagerring 20 ausgebildet wird, mit dem Bezugszeichen 20 bezeichnet. Die erste Fertigungsstraße 1a umfasst in Folge mehrere Fertigungseinheiten in Form einer Schleifmaschine 2a, einer ersten Reinigungseinheit 4a, einer Härtungseinheit 8a, einer Honmaschine 3a, einer weiteren Reinigungseinheit 4a' in Kombination mit einer Demagnetisierungseinheit 6a, einer Messeinheit 7a zur Vermessung der ersten Lagerkomponente und einer Transporteinheit 5a. In der Messeinheit 7a der ersten Fertigungsstraße 1a wird ein Abmaß, hier der Außendurchmesser, des Lagerinnenrings gemessen.

In der zweiten Fertigungsstraße 1b wird eine zweite Lagerkomponente in Form eines Lagerrings 30 gefertigt, hier insbesondere in Form eines Lageraußenrings. Auch hier wird der Einfachheit halber bereits der zu bearbeitende Rohling, der beim Durchlauf durch die zweite Fertigungsstraße 1b erst durch Bearbeitung zu dem Lagerring 30 ausgebildet wird, mit dem Bezugszeichen 30 bezeichnet. Die zweite Fertigungsstraße 1b umfasst in Folge mehrere Fertigungseinheiten in Form einer Schleifmaschine 2b, einer ersten Reinigungseinheit 4b, einer Härtungseinheit 8b, einer Honmaschine 3b, einer weiteren Reinigungseinheit 4b' in Kombination mit einer Demagnetisierungseinheit 6b, einer Messeinheit 7b zur Vermessung der Lagerkomponente und einer Transporteinheit 5b. In der Messeinheit 7b der zweiten Fertigungsstraße 1b wird ein Abmaß, hier der Innendurchmesser, des Lageraußenrings gemessen.

In der dritten Fertigungsstraße 1c wird eine dritte Lagerkomponente in Form eines Wälzkörpers 35 gefertigt, hier insbesondere in Zylinderform. Auch hier wird der Einfachheit halber bereits der zu bearbeitende Rohling, der beim Durchlauf durch die dritte Fertigungsstraße 1c erst durch Bearbeitung zu dem Wälzkörper 35 ausgebildet wird, mit dem Bezugszeichen 35 bezeichnet. Die dritte Fertigungsstraße 1c umfasst in Folge mehrere Fertigungseinheiten in Form einer Schleifmaschine 2c, einer ersten Reinigungseinheit 4c, einer Härtungseinheit 8c, einer Honmaschine 3c, einer weiteren Reinigungseinheit 4c' in Kombination mit einer Demagnetisierungseinheit 6c, einer Messeinheit 7c zur Vermessung der Lagerkomponente und einer Transporteinheit 5c.

In der vierten Fertigungsstraße 1d wird eine weitere dritte Lagerkomponente in Form eines Wälzkörpers 35' gefertigt, hier in Abstimmung zu der dritten Fertigungsstraße 1c ebenfalls in Zylinderform. Auch hier wird der Einfachheit halber bereits der zu bearbeitende Rohling, der beim Durchlauf durch die vierte Fertigungsstraße 1d erst durch Bearbeitung zu dem Wälzkörper 35' ausgebildet wird, mit dem Bezugszeichen 35' bezeichnet. Die vierte Fertigungsstraße 1d umfasst in Folge mehrere Fertigungseinheiten in Form einer Schleifmaschine 2d, einer ersten Reinigungseinheit 4d, einer Härtungseinheit 8d, einer Honmaschine 3d, einer weiteren Reinigungseinheit 4d' in Kombination mit einer Demagnetisierungseinheit 6d, einer Messeinheit 7d zur Vermessung der Lagerkomponente und einer Transporteinheit 5d.

Dabei sind die Schleifmaschinen 2a, 2b, 2c, 2d sämtlich als Vertikalschleifmaschinen und die Honmaschinen 3a, 3b, 3c, 3d sämtlich als Vertikalhonmaschinen ausgebildet. Dies ermöglicht, dass die Lagerkomponenten die Fertigungsstraßen 1a, 1b, 1c, 1d auf einer gemeinsamen gleichbleibenden horizontalen Ebene E (vergleiche FIG 1) durchlaufen können. Dadurch wird eine Montage der Lagerkomponenten zu einem Wälz- oder Gleitlager 40 in einer Montageeinheit 9, welche den Fertigungsstraßen 1a, 1b, 1c, 1d nachgeordnet ist, wesentlich vereinfacht.

Die erste Fertigungsstraße 1a und die zweite Fertigungsstraße 1b sind durch eine Datenübertragungsleitung 50 miteinander verbunden und derart synchronisiert, dass das ermittelte Abmaß der ersten Lagerkomponente an die zweite Fertigungsstraße 1b übermittelbar ist. Die Schleifbearbeitung und/oder das Honen zur Fertigung der zweiten Lagerkomponente in der zweiten Fertigungsstraße 1b erfolgt geregelt basierend auf dem ermittelten Abmaß der ersten Lagerkomponente. Dabei wird in einer Regelungseinheit 60, welche in die Schleifmaschine 2b der zweiten Fertigungsstraße 1b integriert ist, der gemessene Außendurchmesser des Lagerringes 20 in Form des Lagerinnenrings zur Ermittlung eines Sollmaßes für einen Innendurchmesser des Lagerringes 30 in Form des Lageraußenringes eingesetzt. Es erfolgt eine Herstellung des Lagerringes 30 mit Abmaßen, die auf die Abmaße des Lagerringes 20 abgestimmt sind.

Die erste Fertigungsstraße 1a und die zweite Fertigungsstraße 1b sind mit der dritten Fertigungsstraße 1c durch eine Datenübertragungsleitung 51 verbunden und derart synchronisiert, dass das ermittelte Abmaß der ersten Lagerkomponente und das ermittelte weitere Abmaß der zweiten Lagerkomponente an die dritte Fertigungsstraße 1c übermittelbar sind. Die Schleifbearbeitung und/oder das Honen zur Fertigung der dritten Lagerkomponente in der dritten Fertigungsstraße 1c erfolgt geregelt basierend auf den ermittelten Abmaßen der ersten Lagerkomponente und der zweiten Lagerkomponente. Dabei wird in einer Regelungseinheit 60', welche in die Schleifmaschine 2c der dritten Fertigungsstraße 1c integriert ist, der gemessene Außendurchmesser des Lagerringes 20 in Form des Lagerinnenrings und der gemessene Innendurchmesser des Lagerringes 30 in Form des Lageraußenringes zur Ermittlung eines Sollmaßes für die zylindrischen Wälzkörper 35 eingesetzt, die mit den Lagerringen 20, 30 unmittelbar montiert werden sollen. Es erfolgt eine Herstellung der Wälzkörper 35 mit Abmaßen, die auf die Abmaße des Lagerringes 20 und des Lagerringes 30 abgestimmt sind.

Um die erforderliche Anzahl an Wälzkörpern 35 für das zu montierende Wälzlager parallel zur Fertigung der Lagerringe 20, 30 bereitstellen zu können, wird hier die vierte Fertigungsstraße 1d, falls notwendig auch noch weitere Fertigungsstraßen, vorgesehen. Die Synchronisierung der vierten Fertigungsstraße 1d mit der ersten Fertigungsstraße 1a und der zweiten Fertigungsstraße 1b erfolgt analog zur Synchronisation der dritten Fertigungsstraße 1c. Dabei wird in einer Regelungseinheit 60", welche in die Schleifmaschine 2d der vierten Fertigungsstraße 1d integriert ist, der gemessene Außendurchmesser des Lagerringes 20 in Form des Lagerinnenrings und der gemessene Innendurchmesser des Lagerringes 30 in Form des Lageraußenringes zur Ermittlung eines Sollmaßes für die zylindrischen Wälzkörper 35' eingesetzt, die mit den Lagerringen 20, 30 unmittelbar montiert werden sollen. Es erfolgt eine Herstellung der Wälzkörper 35' mit Abmaßen, die auf die Abmaße des Lagerringes 20 und des Lagerringes 30 abgestimmt sind.

Die Montage der Lagerkomponenten, also der Lagerringe 20, 30 und gegebenenfalls der Wälzkörper 35, 35', die in ihren Abmaßen aufeinander abgestimmt gefertigt sind, zu einem Wälz- oder Gleitlager 40 erfolgt in der, den Fertigungsstraßen 1a, 1b, 1c, 1d nachgeordneten Montageeinheit 9. Diese ist zur Endmontage eines Wälz- oder Gleitlagers 40 umfassend die aus den Fertigungsstraßen stammenden Lagerkomponenten eingerichtet. Es entfällt eine Zwischenspeicherung der gefertigten Lagerkomponenten und damit auch die Gefahr, dass die Maßhaltigkeit der gefertigten Lagerkomponenten beispielsweise durch erforderliche mechanische Eingriffe beim Zwischenlagern oder Zwischenspeichern, z.B. durch ein gegenseitiges in Kontakt kommen der fertigen Lagerkomponenten, wieder beeinträchtigt wird.

### Bezuqszeichenliste

- 1, 1a, 1b, 1c, 1d: Fertigungsstraße
- 2a,2b,2c, 2d: Schleifmaschine, Vertikalschleifmaschine
- 3a,3b,3c,3d: Honmaschine; Vertikalhonmaschine
- 4a,4b,4c,4d, 4a',4b',4c',4d': Reinigungseinheit
- 5, 5a, 5b, 5c, 5d: Transporteinheit
- 6a,6b,6c,6d: Demagnetisierungeinheit
- 7a,7b,7c,7d: Messeinheit
- 8a,8b,8c,8d: Härtungseinheit
- 9: Montageeinheit
- 20, 30: Lagerring
- 35, 35': Wälzkörper
- 40: Wälz- oder Gleitlager
- 50, 51: Datenübertragungsleitung
- 60, 60',60": Regelungseinheit
- 100: Fertigungsanlage
- 101, 101': Bediengasse

- E: horizontale Ebene

## Patentansprüche

1. Verfahren zur Herstellung von Lagerkomponenten zur Ausbildung eines Wälz- oder Gleitlagers (40), wobei mindestens zwei Fertigungsstraßen (1, 1a, 1b, 1c, 1d) eingesetzt werden, wobei jede Fertigungsstraße (1, 1a, 1b, 1c, 1d) mindestens eine Schleifmaschine (2a, 2b, 2c, 2d), mindestens eine Honmaschine (3a, 3b, 3c, 3d), mindestens eine Messeinheit (7a, 7b, 7c, 7d) zur Vermessung der Lagerkomponenten und mindestens eine Transporteinheit (5, 5a, 5b, 5c, 5d) umfasst, wobei jede Lagerkomponente mittels der mindestens einen Transporteinheit (5, 5a, 5b, 5c, 5d) durch die jeweilige Fertigungsstraße (1, 1a, 1b, 1c, 1d) transportiert wird, wobei mindestens eine Schleifbearbeitung jeder Lagerkomponente mittels der mindestens einen Schleifmaschine (2a, 2b, 2c, 2d) und mindestens ein Honen jeder Lagerkomponente mittels der mindestens einen Honmaschine (3a, 3b, 3c, 3d) erfolgt, wobei eine erste Lagerkomponente der Lagerkomponenten in mindestens einer der mindestens zwei Fertigungsstraßen (1, 1a, 1b, 1c, 1d) vor der Schleifbearbeitung und/oder nach der Schleifbearbeitung und/oder nach dem Honen zur Ermittlung mindestens eines Abmaßes der ersten Lagerkomponente mittels der mindestens einen Messeinheit (7a, 7b, 7c, 7d) vermessen wird, **dadurch gekennzeichnet, dass** die mindestens zwei Fertigungsstraßen (1, 1a, 1b, 1c, 1d) derart synchronisiert betrieben werden, dass eine Regelung der Schleifbearbeitung und/oder des Honens zur Fertigung einer weiteren Lagerkomponente in der zumindest einen weiteren Fertigungsstraße (1, 1a, 1b, 1c, 1d) basierend auf dem mindestens einen ermittelten Abmaß der ersten Lagerkomponente erfolgt, und wobei die erste Lagerkomponente und die mindestens eine weitere Lagerkomponente zur Ausbildung des Wälz- oder Gleitlagers (40) miteinander kombiniert werden.

2. Verfahren nach Anspruch 1, wobei die Lagerkomponente als ein Lagerring (20, 30), insbesondere als ein Lageraußenring oder als ein Lagerinnenring, oder als ein Wälzkörper (35, 35') ausgebildet wird.

3. Verfahren nach einem der Ansprüche 1 oder 2, wobei mindestens drei Fertigungsstraßen (1a, 1b, 1c, 1d) synchronisiert betrieben werden, wobei die erste Lagerkomponente in mindestens einer ersten Fertigungsstraße (1a) der mindestens drei Fertigungsstraßen (1a, 1b, 1c, 1d) vor der Schleifbearbeitung und/oder nach der Schleifbearbeitung und/oder nach dem Honen zur Ermittlung des mindestens einen Abmaßes der ersten Lagerkomponente vermessen wird, dass eine Regelung der Schleifbearbeitung und/oder des Honens zur Fertigung einer zweiten Lagerkomponente in der zweiten Fertigungsstraße (1b, 1c, 1d) basierend auf dem mindestens einen ermittelten Abmaß der ersten Lagerkomponente erfolgt, dass die zweite Lagerkomponente in der zweiten Fertigungsstraße (1b, 1c, 1d) vor der Schleifbearbeitung und/oder nach der Schleifbearbeitung und/oder nach dem Honen zur Ermittlung mindestens eines weiteren Abmaßes der zweiten Lagerkomponente vermessen wird, und dass eine Regelung der Schleifbearbeitung und/oder des Honens zur Fertigung mindestens einer dritten Lagerkomponente in der mindestens einen dritten Fertigungsstraße (1c, 1d) basierend auf mindestens dem ermittelten Abmaß und/oder dem ermittelten weiteren Abmaß erfolgt.

4. Verfahren nach einem der Ansprüche 1 bis 3, wobei jede Lagerkomponente die jeweilige Fertigungsstraße (1, 1a, 1b, 1c, 1d) liegend auf einer gleichbleibenden horizontalen Ebene (E) durchläuft.

5. Verfahren nach einem der Ansprüche 1 bis 4, wobei mindestens eine, den Fertigungsstraßen (1, 1a, 1b, 1c, 1d) nachgeordnete Montageeinheit (9) vorgesehen ist und dass in dieser eine Montage der miteinander zu kombinierenden ersten Lagerkomponente und der zumindest einen weiteren Lagerkomponente zu dem Wälz- oder Gleitlager (40) erfolgt.

6. Fertigungsanlage (100) umfassend mindestens zwei Fertigungsstraßen (1, 1a, 1b, 1c, 1d) zur Herstellung von Lagerkomponenten und mindestens eine, den Fertigungsstraßen (1, 1a, 1b, 1c, 1d) nachgeordnete Montageeinheit (9) zur Montage eines Wälz- oder Gleitlagers (40) aus den Lagerkomponenten, wobei jede Fertigungsstraße (1, 1a, 1b, 1c, 1d) jeweils mindestens eine Schleifmaschine (2a, 2b, 2c, 2d), mindestens eine Honmaschine (3a, 3b, 3c, 3d), mindestens eine Messeinheit (7a, 7b, 7c, 7d) zur Vermessung der Lagerkomponenten und mindestens eine Transporteinheit (5a, 5b, 5c, 5d) umfasst, wobei die Lagerkomponenten mittels der mindestens einen Transporteinheit (5a, 5b, 5c, 5d) durch die jeweilige Fertigungsstraße (1, 1a, 1b, 1c, 1d) transportierbar und dabei der mindestens einen Schleifmaschine (2a, 2b, 2c, 2d) und der mindestens einen Honmaschine (3a, 3b, 3c, 3d) zuführbar sind, wobei eine erste Lagerkomponente der Lagerkomponenten in mindestens einer der mindestens zwei Fertigungsstraßen (1, 1a, 1b, 1c, 1d) vorder Schleifbearbeitung und/oder nach der Schleifbearbeitung und/oder nach dem Honen zur Ermittlung mindestens eines Abmaßes der ersten Lagerkomponente vermessbar ist, **dadurch gekennzeichnet, dass** die mindestens zwei Fertigungsstraßen (1, 1a, 1b, 1c, 1d) durch mindestens eine Datenübertragungsleitung (50, 51) miteinander verbunden und derart synchronisiert betrieben sind, dass das mindestens eine ermittelte Abmaß der ersten Lagerkomponente zumindest an eine weitere Fertigungsstraße (1, 1a, 1b, 1c, 1d) der mindestens zwei Fertigungsstraßen (1, 1a, 1b, 1c, 1d) übermittelbar ist, und dass die Schleifbearbeitung und/oder das Honen zur Fertigung einer weiteren Lagerkomponente in der zumindest einen weiteren Fertigungsstraße (1, 1a, 1b, 1c, 1d) basierend auf dem mindestens einen ermittelten Abmaß der ersten Lagerkomponente geregelt ist.

7. Fertigungsanlage (100) nach Anspruch 6, wobei jede Fertigungsstraße (1, 1a, 1b, 1c, 1d) derart ausgebildet ist, dass die Lagerkomponenten diese auf einer gleichbleibenden horizontalen Ebene (E) durchlaufen.

8. Fertigungsanlage (100) nach Anspruch 6 oder Anspruch 7, wobei mindestens eine Bediengasse (101, 101') vorhanden ist, wobei beiderseits einer jeden Bediengasse (101, 101') je eine Fertigungsstraße (1a, 1b, 1c, 1d) angeordnet ist, deren Bedien- und Anzeigeeinheiten zueinander zeigend angeordnet sind.

9. Fertigungsanlage gemäß einem der Ansprüche 6 bis 8, wobei die mindestens eine Montageeinheit (9) mit den mindestens zwei Fertigungsstraßen (1a, 1b, 1c, 1d) verkettet ist und zur Endmontage des Wälz- oder Gleitlagers (40) umfassend die aus den mindestens zwei Fertigungsstraßen (1a, 1b, 1c, 1d) stammenden Lagerkomponenten eingerichtet ist.

10. Fertigungsanlage nach einem der Ansprüche 6 bis 9, wobei mindestens drei Fertigungsstraßen (1a, 1b, 1c, 1d) vorgesehen sind.

## Claims

1. A method for producing bearing components for forming a rolling or sliding bearing (40), at least two production lines (1, 1a, 1b, 1c, 1d) being used, each production line (1, 1a, 1b, 1c, 1d) comprising at least one grinding machine (2a, 2b, 2c, 2d), at least one honing machine (3a, 3b, 3c, 3d), at least one measuring unit (7a, 7b, 7c, 7d) for measuring the bearing components and at least one transport unit (5, 5a, 5b , 5c, 5d), each bearing component being transported through the respective production line (1, 1a, 1b, 1c, 1d) by means of the at least one transport unit (5, 5a, 5b, 5c, 5d), at least one grinding operation being performed on each bearing component by means of the at least one grinding machine (2a, 2b, 2c, 2d) and at least one honing being performed on each bearing component by means of the at least one honing machine (3a, 3b, 3c, 3d), a first bearing component of the bearing components in at least one of the at least two production lines (1, 1a, 1b, 1c, 1d) being measured by means of the at least one measuring unit (7a, 7b, 7c, 7d) before the grinding operation and/or after the grinding operation and/or after the honing to determine at least one dimension of the first bearing component, **characterized in that** the at least two production lines (1, 1a, 1b, 1c, 1d) are operated in a synchronised manner in such a way that a control of the grinding operation and/or the honing for producing a further bearing component in the at least one further production line (1, 1a, 1b, 1c, 1d) takes place on the basis of the at least one determined dimension of the first bearing component, and wherein the first bearing component and the at least one further bearing component are combined with one another to form the rolling or sliding bearing (40).

2. The method according to claim 1, wherein the bearing component is formed as a bearing ring (20, 30), in particular as an outer bearing ring or as an inner bearing ring or as a rolling element (35, 35').

3. The method according to any one of claims 1 or 2, wherein at least three production lines (1a, 1b, 1c, 1d) are operated in a synchronised manner, wherein the first bearing component in at least one first production line (1a) of the at least three production lines (1a, 1b, 1c, 1d) is measured before the grinding operation and/or after the grinding operation and/or after the honing, to determine the at least one dimension of the first bearing component, wherein a control of the grinding operation and/or the honing for producing a second bearing component in the second production line (1b, 1c, 1d) takes place on the basis of the at least one determined dimension of the first bearing component, wherein the second bearing component in the second production line (1b, 1c, 1d) is measured before the grinding operation and/or after the grinding operation and/or after the honing to determine at least one further dimension of the second bearing component, and wherein a control of the grinding operation and/or the honing for producing at least one third bearing component in the at least one third production line (1c, 1d) takes place on the basis of at least the determined dimension and/or the determined further dimension.

4. The method according to any one of claims 1 to 3, wherein each bearing component passes through the respective production line (1, 1a, 1b, 1c, 1d) lying on a constant horizontal plane (E).

5. The method according to any one of claims 1 to 4, wherein at least one assembly unit (9) is provided downstream of the production lines (1, 1a, 1b, 1c, 1d) and wherein, in this assembly unit, the first bearing components and the at least one further bearing component to be combined together are assembled to form the rolling or sliding bearing (40).

6. A production system (100) comprising at least two production lines (1, 1a, 1b, 1c, 1d) for producing bearing components and at least one assembly unit (9) downstream of the production lines (1, 1a, 1b, 1c, 1d) for assembling a rolling or sliding bearing (40) from the bearing components, each production line (1, 1a, 1b, 1c, 1d) comprising at least one grinding machine (2a, 2b, 2c, 2d), at least one honing machine (3a, 3b, 3c, 3d), at least one measuring unit (7a, 7b, 7c, 7d) for measuring the bearing components and at least one transport unit (5a, 5b, 5c, 5d), the bearing components being transportable through the respective production line (1, 1a, 1b, 1c, 1d) by means of the at least one transport unit (5a, 5b, 5c, 5d) and feedable to the at least one grinding machine (2a, 2b, 2c, 2d) and the at least one honing machine (3a, 3b, 3c, 3d), a first bearing component of the bearing components in at least one of the at least two production lines (1, 1a, 1b, 1c, 1d) being measurable before the grinding operation and/or after the grinding operation and/or after the honing, to determine at least one dimension of the first bearing component, **characterized in that** the at least two production lines (1, 1a, 1b, 1c , 1d) are connected to one another by at least one data transmission line (50, 51) and are operated in a synchronised manner in such a way that the at least one determined dimension of the first bearing component can be transmitted to at least one further production line (1, 1a, 1b, 1c, 1d) of the at least two production lines (1, 1a, 1b, 1c, 1d), and **in that** the grinding operation and/or the honing for producing a further bearing component in the at least one further production line (1, 1a, 1b, 1c, 1d) is controlled on the basis of the at least one determined dimension of the first bearing component.

7. The production system (100) according to claim 6, wherein each production line (1, 1a, 1b, 1c, 1d) is formed in such a way that the bearing components pass through it on a constant horizontal plane (E).

8. The production system (100) according to claim 6 or claim 7, wherein at least one service lane (101, 101') is present, wherein a production line (1a, 1b, 1c, 1d) is arranged on both sides of each service lane (101, 101'), the operating and display units of which are arranged so as to be facing one another.

9. The production system according to any one of claims 6 to 8, wherein the at least one assembly unit (9) is linked to the at least two production lines (1a, 1b, 1c, 1d) and is set up for the final assembly of the rolling or sliding bearing (40) comprising the bearing components coming from the at least two production lines (1a, 1b, 1c, 1d).

10. The production system according to any one of claims 6 to 9, wherein at least three production lines (1a, 1b, 1c, 1d) are provided.

## Revendications

1. Procédé de fabrication de composants de palier pour former un palier à roulement ou un palier lisse (40), dans lequel au moins deux lignes de fabrication (1, 1a, 1b, 1c, 1d) sont utilisées, chaque ligne de fabrication (1, 1a, 1b, 1c, 1d) comportant au moins une rectifieuse (2a, 2b, 2c, 2d), au moins une machine à roder (3a, 3b, 3c, 3d), au moins une unité de mesure (7a, 7b, 7c, 7d) pour mesurer les composants de palier et au moins une unité de transport (5, 5a, 5b, 5c, 5d), chaque composant de palier étant transporté à travers la ligne de fabrication respective (1, 1a, 1b, 1c, 1d) au moyen de l'au moins une unité de transport (5 , 5a, 5b, 5c, 5d), au moins une opération de rectification étant effectuée sur chaque composant de palier au moyen de l'au moins une rectifieuse (2a, 2b, 2c, 2d) et au moins un rodage de chaque composant de palier étant effectué au moyen de l'au moins une machine à roder (3a, 3b, 3c, 3d), un premier composant de palier des composants de palier étant mesuré dans au moins l'une des au moins deux lignes de fabrication (1, 1a, 1b, 1c, 1d) avant l'opération de rectification et/ou après l'opération de rectification et/ou après le rodage pour déterminer au moins une dimension du premier composant de palier au moyen de l'au moins une unité de mesure (7a, 7b, 7c, 7d), **caractérisé en ce que** les au moins deux lignes de fabrication (1, 1a, 1b, 1c, 1d) fonctionnent de manière synchrone de façon qu'une régulation de l'opération de rectification et/ou du rodage pour la fabrication d'un autre composant de palier puisse être effectuée dans l'au moins une autre ligne de fabrication (1, 1a, 1b, 1c, 1d) sur la base de l'au moins une dimension déterminée du premier composant de palier et le premier composant de palier et l'au moins un autre composant de palier étant combinés entre eux pour former le palier à roulement ou palier lisse (40).

2. Procédé selon la revendication 1, dans lequel le composant de palier est conçu comme une bague de palier (20, 30), en particulier comme une bague de palier extérieure ou comme une bague de palier intérieure ou comme un corps roulant (35, 35').

3. Procédé selon l'une quelconque des revendications 1 ou 2, dans lequel au moins trois lignes de fabrication (1a, 1b, 1c, 1d) fonctionnent de manière synchrone, le premier composant de palier dans au moins une première ligne de fabrication (1a) des au moins trois lignes de fabrication (1a, 1b, 1c, 1d) étant mesuré avant l'opération de rectification et/ou après l'opération de rectification et/ou après le rodage pour déterminer l'au moins une dimension du premier composant de palier, qu'une régulation de l'opération de rectification et/ou du rodage pour la fabrication d'un deuxième composant de palier dans la deuxième ligne de fabrication (1b, 1c, 1d) est effectuée sur la base de l'au moins une dimension déterminée du premier composant de palier, que le deuxième composant de palier dans la deuxième ligne de fabrication (1b, 1c, 1d) est mesuré avant l'opération de rectification et/ou après l'opération de rectification et/ou après le rodage pour déterminer au moins une autre dimension du deuxième composant de palier et qu'une régulation de l'opération de rectification et/ou du rodage pour la fabrication d'au moins un troisième composant de palier dans l'au moins une troisième ligne de fabrication (1c, 1d) est effectuée sur la base d'au moins la dimension déterminée et/ou de l'autre dimension déterminée.

4. Procédé selon l'une quelconque des revendications 1 à 3, dans lequel chaque composant de palier parcourt la ligne de fabrication (1, 1a, 1b, 1c, 1d) selon un plan horizontal (E) constant.

5. Procédé selon l'une quelconque des revendications 1 à 4, dans lequel au moins une unité d'assemblage (9) en aval des lignes de fabrication (1, 1a, 1b, 1c, 1d) est prévue et que dans celle-ci, un assemblage du premier composant de palier et de l'au moins un autre composant de palier à combiner entre eux est effectué pour obtenir le palier à roulement ou palier lisse (40).

6. Installation de fabrication (100) comprenant au moins deux lignes de fabrication (1, 1a, 1b, 1c, 1d) pour fabriquer des composants de palier et au moins une unité d'assemblage (9) en aval des lignes de fabrication (1, 1a, 1b, 1c, 1d) pour assembler un palier à roulement ou palier lisse (40) à partir des composants de palier, chaque ligne de fabrication (1, 1a, 1b, 1c, 1d) comportant respectivement au moins une rectifieuse (2a, 2b, 2c, 2d), au moins une machine à roder (3a, 3b, 3c, 3d), au moins une unité de mesure (7a, 7b, 7c, 7d) pour mesurer les composants de palier et au moins une unité de transport (5a, 5b, 5c, 5d), les composants de palier pouvant être transportés au moyen de l'au moins une unité de transport (5a, 5b, 5c, 5d) à travers la ligne de fabrication (1, 1a, 1b, 1c, 1d) respective et pouvant ainsi être acheminés vers l'au moins une rectifieuse (2a, 2b , 2c, 2d) et l'au moins une machine à roder (3a, 3b, 3c, 3d), un premier composant de palier des éléments de palier pouvant être mesuré dans au moins l'une des au moins deux lignes de fabrication (1, 1a, 1b, 1c, 1d) avant l'opération de rectification et/ou après l'opération de rectification et/ou après le rodage pour déterminer au moins une dimension du premier composant de palier, **caractérisée en ce que** les au moins deux lignes de fabrication (1, 1a, 1b , 1c , 1d) sont reliées entre elles par au moins une ligne de transmission de données (50, 51) et fonctionnent de manière synchrone de façon que l'au moins une dimension déterminée du premier composant de palier puisse être transmise à au moins une autre ligne de fabrication (1, 1a, 1b, 1c, 1d) des au moins deux lignes de fabrication (1, 1a, 1b, 1c, 1d) et que l'opération de rectification et/ou le rodage pour la fabrication d'un autre composant de palier dans l'au moins une autre ligne de fabrication (1, 1a, 1b, 1c, 1d) soient régulés sur la base de l'au moins une dimension déterminée du premier composant de palier.

7. Installation de fabrication (100) selon la revendication 6, dans laquelle chaque ligne de fabrication (1, 1a, 1b, 1c, 1d) est conçue de façon que les composants de palier la traversent selon un plan horizontal (E) constant.

8. Installation de fabrication (100) selon la revendication 6 ou la revendication 7, dans laquelle au moins une allée de manœuvre (101, 101') est présente, une ligne de fabrication (1a, 1b, 1c, 1d) étant disposée de chaque côté de chaque allée de manœuvre (101, 101'), dont les unités de manœuvre et d'affichage sont disposées pointant l'une vers l'autre.

9. Installation de fabrication selon l'une quelconque des revendications 6 à 8, dans laquelle l'au moins une unité d'assemblage (9) est concaténée aux au moins deux lignes de fabrication (1a, 1b, 1c, 1d) et est conçue pour l'assemblage final du palier à roulement ou palier lisse (40) comprenant les composants de palier provenant des au moins deux lignes de fabrication (1a, 1b, 1c, 1d).

10. Installation de fabrication selon l'une quelconque des revendications 6 à 9, dans laquelle au moins trois lignes de fabrication (1a, 1b, 1c, 1d) sont prévues.
